(19) Europäisches Patentamt
European Patent Office
Office européen des brevets

(11) Veröffentlichungsnummer: **0 303 907**
**B1**

(12) # EUROPÄISCHE PATENTSCHRIFT

(45) Veröffentlichungstag der Patentschrift: **10.10.90**

(51) Int. Cl.[5]: **C08J 3/02,** C08G 18/08, B29B 7/74

(21) Anmeldenummer: **88112698.1**

(22) Anmeldetag: **04.08.88**

(54) **Verfahren zur Herstellung von wässrigen Polyurethandispersionen.**

(30) Priorität: **15.08.87 DE 3727252**

(43) Veröffentlichungstag der Anmeldung: **22.02.89 Patentblatt 89/8**

(45) Bekanntmachung des Hinweises auf die Patenterteilung: **10.10.90 Patentblatt 90/41**

(84) Benannte Vertragsstaaten: **BE DE ES FR GB IT NL**

(56) Entgegenhaltungen:
**EP-A- 0 024 296**
**DE-A- 3 603 996**
**FR-A- 2 242 414**

(73) Patentinhaber: **BAYER AG, D-5090 Leverkusen 1 Bayerwerk(DE)**

(72) Erfinder: **Henning, Wolfgang, Dr., Zur Linde 27, D-5067 Kürten(DE)**
Erfinder: **Petersen, Harald, Dr., Claudiusstrasse 27, D-4047 Dormagen(DE)**
Erfinder: **Moormann, Gerhard, Dipl.-Ing., Bunzlauer Weg 21, D-4049 Rommerskirchen(DE)**

**EP 0 303 907 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von wäßrigen Polyurethandispersionen unter Verwendung von speziellen Dispergieraggregaten, die im folgenden näher beschrieben werden.

Die Herstellung von wäßrigen Polyurethandispersionen, wobei hierunter sowohl wäßrige Dispersionen bzw. Suspensionen von reinen Polyurethanen als auch von Polyurethanharnstoffen zu verstehen sind, ist bekannt und wird beispielsweise in den folgenden Literaturstellen beschrieben:
DE-PS 880 485, DE-AS 1 044 404, US-PS 3 036 998, DE-PS 1 178 586, DE-PS 1 184 946, DE-AS 1 237 306, DE-AS 1 495 745, DE-OS 1 595 602, DE-OS 1 770 068, DE-OS 2 019 324, DE-OS 2 035 732, DE-OS 2 446 440, DE-OS 2 345 256, DE-OS 2 427 274, US-PS 3 479 310,
Angewandte Chemie 82, 53 (1970) und Angew. Makromol. Chem. 26, 85 ff (1972).

Es gehört zum bekannten Stand der Technik, daß die Bildung der dispersen Phase in Rührkesseln mit einem Rührer und evtl. Strombrechern in diskontinuierlicher Fahrweise erfolgt.

Es sind auch Verfahren zur kontinuierlichen Herstellung bekannt, die sich Mischreaktoren, wie sie in DE-OS 2 260 870 beschrieben sind, oder Kreiselhomogenisatoren, wie sie in DE-OS 2 311 635 beschrieben sind, bedienen.

Die genannten Vorrichtungen zur Herstellung von Dispersionen oder Suspensionen, insbesondere auf Polyurethanbasis, sind jedoch mit dem Nachteil behaftet, daß für die Vermischung der Ausgangskomponenten mechanisch bewegte Aggregate eingesetzt werden, die nur geringe spezifische Leistungsdichten aufweisen, sehr störanfällig und einem hohen Verschleiß unterworfen sind. Die Herstellung von filmbildenden Dispersionen ist besonders schwierig, da es in Zonen geringer Turbulenz leicht zu Ablagerungen und infolgedessen zu Verstopfungen kommen kann.

Besser geeignete Mischaggregate, wie sie in der DE-OS 2 344 135 beschrieben sind, basieren auf dem Prinzip der Gegenstrominjektionsdüsen. Hierbei wird ein flüssiges oder in einem organischen Lösungsmittel ge löstes, endständige Isocyanatgruppen aufweisendes Prepolymer durch Gegenstrominjektionsdüsen mit Wasser, gegebenenfalls unter Mitverwendung von Emulgatoren oder anderen geeigneten Hilfsmitteln, vermischt und gegebenenfalls vor, während oder nach der Vermischung mit einem Kettenverlängerungsmittel versetzt. Das Verfahren bietet den Vorteil, auf mechanisch bewegte Mischaggregate verzichten zu können und hohe Mischleistungen zur Verfügung zu stellen.

Wie den Ausführungsbeispielen der DE-OS 2 344 135 zu entnehmen ist, werden sowohl das Prepolymer als auch die wäßrige Lösung vor Eintritt in die Mischkammer auf Drücke bis zu 200 bar gebracht. Dies ist insbesondere beim Dosieren von höherviskosen, reaktiven Prepolymeren von Nachteil, da die Förderung mit Hilfe von zwangsfördernden Pumpen gegen Drücke von 20 bis 200 bar problematisch und erfahrungsgemäß nicht betriebssicher ist. Zur Vermeidung von Verstopfungen in der Prepolymerdüse am Eintritt in die Gegenstrommischkammer sind aufwendige Filter in der Zuleitung zur Prepolymerdüse erforderlich. Ein Belegen dieser Filter führt zwangsläufig aufgrund sich ändernder Druckverhältnisse zu Dosierschwankungen und infolgedessen zu unzulässigen Änderungen der Produktzusammensetzung.

Ein weiterer Nachteil der Verfahrensweise nach DE-OS 2 344 135 ist darin zu sehen, daß bei Verwendung von hochviskosen Prepolymeren aufgrund von Druckver lusten in der Prepolymerdüse hohe Vordrucke benötigt werden, aber nur zu einem geringen Teil in Strömungs- und Mischenergie umgesetzt werden.

Zudem lassen sich in den in DE-OS 2 344 135 beschriebenen Gegenstrominjektionsdüsen Anbackungen insbesondere bei filmbildenden Dispersionen in Zonen geringerer Mischleistung nicht ausschließen.

DE-A 3 603 996 beschreibt ein Verfahren zur Herstellung von wässrigen Polyerethan-Dipersionen durch Vermischen von Isocyanatgruppen enthaltenden Umsetzungsprodukten mit Wasser und erwähnt dabei, in ganz allgemeiner Form, daß zur Dispersierung bspw. die in der DE-OS 23 44 135 beschriebenen Gegenstrominjektionsdüsen oder aber auch Gleichstrominjektionsdüsen eingesetzt werden können. Einen besonderen Hinweis bezüglich Verfahrensführung und Ausgestaltung der Düsen gibt diese Literaturstelle nicht. Erfindungswesentliches Merkmal – und für eine optimale Verfahrensführung wesentlich – sind aber gerade die Merkmale "Vordruck von etwa 20 bis etwa 500 bar" und "Koaxiale Düse".

Aufgabe der vorliegenden Erfindung war daher, ein Verfahren zur Verfügung zu stellen, welches die genannten Nachteile nicht aufweist. Die Aufgabe konnte durch die nachstehend näher beschriebene Erfindung gelöst werden.

Die Erfindung betrifft ein Verfahren zu kontinuierlichen Herstellung von wäßrigen Polyurethandispersionen wobei darunter sowohl Dispersionen bzw. Suspensionen von reinen Polyurethanen wie auch von Polyurethanharnstoffen zu verstehen sind, durch Vermischen eines Produktes, das durch Umsetzung von Polyisocyanaten mit Verbindungen vom Molekulargewicht etwa 400 bis etwa 10 000, die mindestens zwei gegenüber Isocyanaten reaktionsfähige Gruppen enthalten, gegebenenfalls unter Mitverwendung weiterer Ausgangsprodukte und/oder Zusatzstoffe, erhalten worden ist, mit Wasser, das Zusatzstoffe enthalten kann, dadurch gekennzeichnet, daß die Vermischung des Polyisocyanatumsetzungsproduktes mit Wasser in einem Gleichstromreaktor erfolgt, wobei eine der zu vermischenden Komponenten oder ein eine der beiden zu vermischenden Komponenten enthaltendes Gemisch auf einen Vordruck von etwa 20 bis etwa 500 bar komprimiert wird und durch eine koaxial angebrachte Düse 1 in das

Kurzzeitmischrohr 2 entspannt und mit der anderen Komponente oder einem die andere Komponente enthaltenden Gemisch vermischt wird.

Die Erfindung vereinigt mehrere Vorteile. Die Durchmischung mit Wasser erfolgt ohne Zuhilfenahme von bewegten Teilen, wodurch eine störungsfreie und verschleißarme Produktion gewährleistet wird. Aufgrund der koaxialen Anordnung von Düse 1 und Kurzzeitmischrohr 2 ist nur eine der zu vermischenden Komponenten auf Drücke von etwa 20 bis etwa 500 bar zu bringen, um die erforderliche Mischenergie aufzubringen. Die oben beschriebenen Probleme bei Dosierungen von hochviskosen Prepolymeren gegen Druck entfallen. Die koaxiale Anordnung von Düse 1 und Kurzzeitmischrohr 2 bewirkt darüberhinaus eine Selbstreinigung des Kurzzeitmischrohres 2. Durch die Selbstreinigung des Kurzzeitmischrohres bleibt das Verweilzeitspektrum und damit die Reaktionsführung und Dispergierung auch bei Dauerbetrieb stabil.

Vorzugsweise wird in das erfindungsgemäße Verfahren ein hydrophiles Umsetzungsprodukt eingesetzt. Bei der Herstellung des in das erfindungsgemäße Verfahren eingesetzte Polyisocyanatumsetzungsprodukts, das auch einen Anteil an unumgesetzten Isocyanatgruppen enthalten kann, können, wie auch aus den oben genannten Literaturstellen hervorgeht, die verschiedenartigsten Ausgangsprodukte (Polyisocyanate oder Verbindungen vom MG etwa 400 bis etwa 10 000, die mindestens zwei gegenüber Isocyanaten reaktionsfähige Gruppe enthalten) und Zusatzstoffe als Aufbaukomponenten (mit)verwendet werden; beispielhaft seien genannt:

Monofunktionelle Isocyanate; monofunktionelle, isocyanatreaktive Komponenten; Ausgansprodukte oder Zusatzstoffe mit ionischen, vorzugweise =N+=-, $-COO^{-}$- oder $-SO_3^{-}$-, Gruppen oder potentiell ionischen Gruppen, wobei die potentiell ionischen Gruppen vor der Vermischung mit Wasser ganz oder teilweise in ionische Gruppen überführt werden, und der Gehalt an (potentiell)ionischen Gruppen 1-200 Milliäquivalent pro 100 g Feststoff beträgt; Ausgangsprodukte oder Zusatzstoffe, die Ethylenoxideinheiten $-CH_2-CH_2-O-$ enthalten, wobei der Gehalt an diesen Einheiten vorzugsweise $\leq$ 25 Gew.-%, bezogen auf Feststoff, beträgt; Kettenverlängerungsmittel, die vorzugsweise ein MG von 18-400 haben, und zwei gegenüber Isocyanatgruppen reaktionsfähige Gruppen besitzen; Beschleuniger für die Isocyanat-Polyadditionsreaktion; Emulgatoren; Laminatoren; Neutralisationsmittel für potentiell ionische Gruppen; Lösungsmittel.

Das als Mischungskomponente zugesetzte Wasser kann Zusatzstoffe, z.B. ein mit Isocyanatgruppen schneller als Wasser reagierendes Kettenverlängerungsmittel enthalten und/oder ein Neutralisationsmittel für potentiell ionische Gruppen enthalten.

Die vorstehend angesprochenen Ausgangsprodukte und Zusatzstoffe werden im folgenden beispielhaft erläutert:

Geeignete Polyisocyanate a) sind beispielsweise

a1)Diisocyanate der Formel $Q(NCO)_2$, wobei Q einen aliphatischen Kohlenwasserstoffrest mit 4 bis 12 Kohlenstoffatomen, einen cycloaliphatischen Kohlenwassertsoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiiscoyanat, 1,4-Diisocyanatocylohexan, 1-Isocyanato-3,3,5-trimethyl-5-isocyanatomethylcyclohexan, 4,4'-Diisocyanatodicyclohexylmethan, 4,4'-Diisocyanato-dicyclohexylpropan-(2,2), 2,4-Diisocyanatobenzol, 2,4-Diisocyanatotoluol, 2,6-Diisocyanatotoluol, 4,4'-Diisocyanatodiphenylmethan, 4,4'-Diisocyanatodiphenylpropan-(2,2), p-Xylylendiisocyanat oder $\alpha,\alpha,\alpha',\alpha'$-Tetramethyl-m-oder p-xylylendiisocyanat, sowie aus diesen Verbindungen bestehende Gemische.

Zu den erfindungsgemäß geeigenten Aufbaukomponenten a) gehören auch beispielsweise

a2)die aus der Polyurethanchemie an sich bekannten NCO-Gruppen aufweisenden Prepolymere, wie sie durch Umsetzung von einfachen Diisocyanaten der unter a1) beispielhaft genannten Art mit organischen Polyhydroxylverbindungen der nachstehend unter b1) beispielhaft genannten Art unter Einhaltung eines NCO/OH-Äquivalentverhältnisses von beispielsweise 1,2:1 bis 10:1, vorzugsweise 1,5:1 bis 2,5:1 erhalten werden können. Aus dem genannten Äquivalentverhältnis ist ersichtlich, daß unter "NCO-Prepolymeren" im Rahmen der Erfindung auch die sogenannten "Semiprepolymeren" zu verstehen sind, d.h. Gemische von überschüssigen, nicht umgesetzten Diisocyanaten mit echten NCO-Prepolymeren.

Weitere mögliche Aufbaukomponenten a) sind auch beispielsweise

a3)hydrophil modifizerte Polyisocyanate, beispielsweise seitenständige Polyetherketten mit eingebauten Ethylenoxideinheiten aufweisende Diisocyanate gemäß US-PS 3 920 598 odr sulfonierte Diisocyanate der beispielsweise in DE-OS 2 227 111 bzw. DE-OS 2 359 615 genannten Art; vorzugsweise werden die hydrophilen Gruppen jedoch über die nachstehend näher beschriebene Aufbaukomponente b) eingebaut.

Grundsätzlich ist es auch möglich, die beispielhaft genannten Aufbaukomponenten a1) bis a3) in Kombination mit höherfunktionellen niedermolekularen Polyisocyanten wie beispielsweise dem Umsetzungsprodukt von 3 Mol 2,4-Diisocyanatotoluol mit einem Mol Trimethylolpropan und/oder in Kombination mit monofunktionellen Isocyanaten wie Phenylisocyanat, Hexylisocyanat oder n-Dodecylisocyanat einzusetzen. Auch der Einsatz von monofunktionellen, Polyetherketten mit eingebauten Ethylen oxideinheiten aufweisenden Isocyanaten der beispielsweise in den US-Patentschriften 3 920 598 bzw. 4 237 264 genannten Art ist prinzipiell möglich.

Bei Verwendung derartiger monofunktioneller Isocyanate ist jedoch im allgemeinen, insbesondere bei der Herstellung von hochmolekularen Polyurethanen, durch gleichzeitige Mitverwendung von höher als difunktionellen Aufbaukomponenten ein vorzeitiger Kettenabbruch zu verhindern. Vorzugsweise werden difunktionelle Isocyanate der oben beispielhaft genannten Art als Aufbaukomponente a) verwendet.

Geeignete Aufbaukomponenten b) sind beispielsweise

b1)die aus der Polyurethanchemie bekannten Polyhydroxypolyester, -polycarbonate oder -polyether des Molekulargewichtsbereichs von etwa 400 bis etwa 10 000, vorzugweise 400 - 4000, vorzugsweise die ensprechenden difunktionellen Verbindungen, wie sie in an sich bekannter Weise durch Umsetzung von mehrbasischen Säuren, insbesondere difunktionellen Säuren wie z.B. Adipinsäure, Phthalsäure, Tetrahydrophthalsäure und/oder Hexahydrophthalsäure mit überschüssigen Mengen an mehrwertigen Alkoholen, vorzugsweise zweiwertigen Alkoholen der nachstehend unter b2) beispielhaft genannten Art bzw. durch Alkoxylierung geeigneter Startermoleküle wie z.B. Wasser, Ammoniak, Anilin oder den nachstehend unter b2) beispielhaft genannten mehrwertigen Alkoholen mit Alkylenoxiden wie z.B. Ethylenoxid und/oder Propylenoxid zugänglich sind.

Geeignete Aufbaukomponenten b) sind weiterhin beispielsweise

b2)mehrwertige Alkohole, insbesondere zweiwertige Alkohole des Molekulargewichtsbereichs 62 bis 399, insbesondere die entsprechenden Alkanpolyole wie z.B. Ethylenglykol, Propylenglkyol, Hexamethylendiol, Glycerin, Trimethylolpropan oder Trimethylolethan oder auch niedermolekulare, Ethergruppen aufweisende Alkohole wie z.B. Diethylenglykol, Triethylenglykol, Dipropylenglykol oder Tripropylenglykol. Beliebige Gemische derartiger Alkohole können ebenfalls eingesetzt werden.

Geeigente Aufbaukomponenten b) sind weiterhin beispielsweise

b3)mindestens zwei aminische oder hydrazinische Aminogruppen aufweisende Verbindungen des Molekulargewichtsbereichs 32 bis 400, z.B. Ethylendiamin, Hexamethylendiamin, Isophorondiamin, 2,4-Diaminotoluol, 4,4′-Diaminodiphenylmethan, 4,4′-Diaminodicyclohexylmethan, Diethylentriamin, Triethylentetramin, Hydrazin oder Hydrazinhydrat. Derartige Aufbaukomponenten können auch in blockierter Form, d.h. insbesondere in Form der entsprechenden Ketimine bzw. Ketazine (Umsetzungsprodukte mit einfachen Ketonen wie Aceton, Methylethylketon oder Methylisobutylketon) eingesetzt werden. Bei Verwendung derartiger blockierter Kettenverlängerungsmittel erfolgt erst unter dem hydrolytischen Einfluß des Dispergierwassers eine Freisetzung der mit Isocyanatgruppen reaktionsfähigen Gruppen.

Weitere als Aufbaukomponenten b) geeignete Verbindungen sind beispielsweise

b4)ionische Aufbaukomponenten oder potentiell ionische Aufbaukomponenten, die neben zwei gegenüber Isocyanatgruppen reaktionsfähigen Gruppen mindestens eine tertiäre oder quarternäre Ammoniumgruppe oder in derartige Gruppen überführbare Gruppen, Carboxyl-, Carboxylat-, Sulfonsäure- und/oder Sulfonatgruppen aufweisen, wobei die zumindest teilweise Überführung der in Salzgruppen der genannten Art überführbaren Gruppen vor oder während der Vermischung mit Wasser erfolgt. Zu den anionischen Aufbaukomponenten gehören beispielsweise die Sulfonatgruppen aufweisenden aliphatischen Diole gemäß DE-OS 2 446 440 oder DE-OS 2 437 218, Carboxlatgruppen oder in Carboxylatgruppen überführbare Carboxylgruppen aufweisenden Diole und/oder Diaminosulfonate der in CA-PS 928 323 beschriebenen Art, wie z.B. das Natriumsalz der N-(2-Aminoethyl)-2-aminoethansulfonsäure.

Zu den Aufbaukomponenten mit (potentiell) kationischen hydrophilen Gruppen gehören beispielsweise tert. Aminstickstoff, aufweisende Aminoalkohole, deren tertiäre Sticktoffatome während oder nach Beendigung der Isocyanat-Polyadditionsreaktion durch Neutralisation oder Quarterniernung zumindest teilweise in ternäre oder quaternäre Ammoniumgruppen überführt werden können, wie beispielsweise n-Methyl-diethanolamin, N-Butyl-diethanolamin, N-Methyl-diisopropanolamin, N-Ethyl-diethanolamin, N-Ethyl-diisopropanolamin oder N,N′-Bis-(2-hydroxyethyl)-perhydropyrazin oder auch entsprechende einwertige Alkohole wie z.B. N,N-Dimethylethanolamin, 2-(2-Dimethylamino-ethoxy)-ethanol, N,N-Diethylethanolamin, 2-(2-Diethylamino-ethoxy)-ethanol, N,N-Di-n-butylaminoethanol, N-(3-Hydroxypropyl)-dimethylamin, N-(2-Hydroxypropyl)-dimethylamin, 1-Diethylamino-2-propanol oder 1,3-Bis-(dimethylamino)-2-propanol.

Hierzu gehören ferner analoge Aufbaukomponenten mit mindestens einer tert. Aminogruppe, d.h. potentiellen ternären oder quarternären Ammoniumgruppe, die anstelle der Hydroxylgruppe bzw. der Hydroxylgruppen mindestens eine primäre oder sekundäre aminische oder hydrazinische Aminogruppe aufweisen, wie z.B. N-Methyl-bis-(3-aminopropyl)-amin, N-Methyl-bis-(2-aminoethyl)-amin oder N,N′,N″-Trimethyl-diethylentriamin, ferner monofunktionelle Verbindungen wie z.B. 1-Amino-2-diethylaminoethan, 1-Amino-3-dimethylaminopropan, 1-Amino-3-diethylamino-propan oder N,N-Dimethylhydrazin.

Bei der Herstellung des erfindungsgemäßen eingesetzten Produktes erfolgt der Einbau der ternären bzw. quaternären Ammoniumgruppen vorzugsweise unter Mitverwendung von tert. Aminogruppen aufweisenden Aufbaukomponenten unter anschließender Überführung der Aminogruppen in die entsprechenden Ammoniumgruppen durch Neutralisation mit anorganischen oder organischen Säuren wie z.B. Salzsäure, Essigsäure, Fumarsäure, Maleinsäure, Milchsäure, Weinsäure, Oxalsäure, N-Methyl-N-(methylaminocarbonyl)-aminomethansulfonsäure oder Phosphorsäure oder durch Quarternierung mit geeigneten Quaternierungsmitteln wie z.B. Methylchlorid, Methyljodid, Dimethylsulfat, Benzylchlorid, Chloressigsäureethylester oder Bromacetamid. Weitere Beispiele geeigneter Neutralisations- oder Quaternierungsmittel sind in der DE-OS 2 827 156 offenbart. Grundsätzlich kann diese Neutralisation oder Quaternierung der tert. Stickstoff aufweisenden Aufbaukomponenten auch vor oder während der

Isocyanat-Polydadditionsreaktion erfolgen. Es ist auch möglich ternäre bzw. quaternäre Ammoniumgruppen in die Polyisocyanat-Polyadditionsprodukte über tert. Aminogruppen aufweisende, als Aufbaukomponente b1) eingesetzte Polyetherpolyole unter anschließender Neutralisation bzw. Quaternierung der tert. Aminogruppen einzuführen.

Bei den Hertellungsvarianten für das erfindungsgemäß eingesetzte Produkt wird die Menge der ionischen oder potentiell ionischen Aufbaukomponenten bzw. der Neutralisationsgrad oder Quarternierungsgrad vorzugsweise so gewählt, daß in den erfindungsgemäßen Endprodukten 2-200, bevorzugt 2-150 und besonders bevorzugt 5-100 Milliäquivalente pro 100 g Feststoff an ionischen Gruppen, insbesondere an =N+=, $-COO^{\ominus}$ oder $SO_3^{\ominus}$, vorliegen. Darüber hinaus ist es auch möglich, anionische und kationische hydrophile Aufbaukomponenten gemeinsam zu verwenden, wie dies beispielsweise in DE-OS 2 721 985 beschrieben ist.

Als Aufbaukomponente b) geeignet sind weiterhin beispielsweise

b5)innerhalb von Polyetherketten eingebaute Ethylenoxideinheiten aufweisende ein- ode zweiwertige Alkohole. Hierzu gehören beispielsweise Verbindungen der allgemeinen Formel

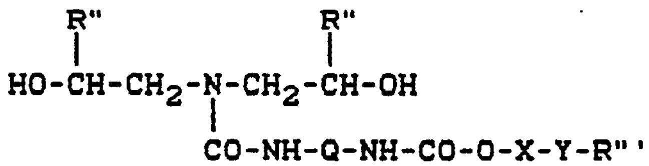

in welcher

Qfür einen zweiwertigen Rest steht, wie er durch Entfernung der Isocyanatgruppen aus einem Diisocyanat der Formel $Q(NCO)_2$ der vorstehend unter a1) genannten Art erhalten wird,

R″für Wasserstoff oder einen einwertigen Kohlenwasserstoffrest mit 1 bis 8 Kohlenstoffatomen, vorzugsweise für Wasserstoff oder eine Methylgruppe, steht,

R‴für einen einwertigen Kohlenwasserstoffrest mit 1 bis 12 Kohlenstoffatomen, vorzugsweise einen unsubstituierten Alkylrest mit 1 bis 4 Kohlenstoffatomen, steht,

Xfür einen Rest steht, wie er durch Entfernung des endständigen Sauerstoffatoms von einer Polyalkylenoxidkette mit 5 bis 90, vorzugsweise 20 bis 70 Kettengliedern erhalten wird, welche zumindest zu 40 %, vorzugsweise zumindest zu 65 % aus Ethylenoxideinheiten bestehen und die neben Ethylenoxideinheiten auch Propylenoxid-, Butylenoxid- oder Styroloxid-Einheiten darstellen können, wobei unter den letztgenannten Einheiten Propylenoxideinheiten bevorzugt sind, und

Yfür Sauerstoff oder $-NR^{IV}-$ steht, wobei $R^{IV}$ bezüglich seiner Definition R‴ entspricht.

Die Herstellung der Verbindungen der letztgenannten Formeln kann gemäß den Verfahrensweisen der US-PS 3 905 929 oder der US-PS 4 190 566 erfolgen.

Weitere bevorzugte hydrophile Einbaukomponenten b5) sind Verbindungen der allgemeinen Formel

HO-X-Y-R‴

wobei

X, Y und R‴ die bereits genannte Bedeutung haben.

Bei Mitverwendung derartiger, monofunktioneller, nichtionisch hydrophiler Polyether kann es oftmals von Vorteil sein, durch Mitverwendung von mehr als difunktionellen Aufbaukomponenten einen vorzeitigen Kettenabbruch zu verhindern. Die monofunktionellen Polyether der zuletzt genannten allgemeinen Formel werden nach an sich bekannten Verfahren, wie sie beispielsweise in den US-Patentschriften 3 905 929, 4 190 566 oder 4 237 264 beschrieben sind, hergestellt.

Bei den Varianten zur Hertstellung des erfindungsgemäß eingesetzten Umsetzungsprodukts werden die Menge der Aufbaukomponenten mit nicht-ionisch hydrophilen Gruppen so gewählt, daß in den erfindungsgemäßen Verfahrensprodukten vorzugsweise $\leq$ 25 Gew.-%, bezogen auf Feststoff an innerhalb einer Polyetherkette vorliegenden Ethylenoxideinheiten, vorliegen.

Weitere geeignete Aufbaukomponenten b) sind

b6)Aminoalkohole des Molekulargewichtsbereichs 61 bis 300 wie z.B. Ethanolamin, Propanolamin, Diethanolamin oder Dipropanolamin.

Schließlich ist als weitere geeignete Aufbaukomponente

b)Wasser zu nennen, welches die Doppelfunktion der kontinuierlichen Phase der erfindungsgemäßen Dispersionen einerseits und die eines Kettenverlängerungsmittels andererseits übernehmen kann.

Vorzugsweise werden zur Herstellung des erfindungsgemäß eingesetzten Umsetzungsprodukts im Sinne der Isocyanat-Additionsreaktion difunktionelle Aufbaukomponenten b) eingesetzt. Es ist jedoch, wie bereits ausgeführt, auch möglich monofunktionelle Aufbaukomponenten b), insbesondere der unter b5) genannten Art oder, zweck Erreichens einer gegebenenfalls erwünschten Molekülverzweigung, höher als difunktionelle Aufbaukomponenten b) einzusetzen.

Weiterhin können zur Herstellung der erfindungsgemäß eingesetzten Umsetzungsprodukte Aufbaukomponenten c) verwendet werden:

c1)1Lösungsmittel mit einem unter 100°C liegenden Siedepunkt, die durch Destillation aus der wasserhaltigen Phase leicht zu entfernen sind und keine gegenüber Isocyanatgruppen reaktionsfähigen Gruppen aufweisen. Derartige Lösungsmittel sind beispiel weise Benzol, Essigester, Aceton, Methylethylketon, Diethylether, Tetrahydrofuran, Methylacetat, Acetonitril, Chloroform, Methylenchlorid, Tetrachlorkohlenstoff, 1,2-Dichlorethan, Trichlorethan, Tetrachlorethylen. Als Lösungsmittel, die dem Prepolymer kontinuierlich zugesetzt werden, kommen

c2)die oben genannten in Frage, wobei diese auch bis zu 50 Gew.-% Wasser enthalten können. Daneben können aber auch Lösungsmittel eingesetzt werden, die gegenüber Isocyanatgruppen nur schwach reaktive Gruppen enthalten, wie beispielsweise Alkohole wie Methanol, Ethanol, Propanol und Isopropanol. Selbstverständlich können die genannten Lösungsmittel auch als Mischungen eingesetzt werden.

Die Verwendung höherreaktiver Lösungsmittel, wie z.B. Glycole, sollte nur dann in Erwägung gezogen werden, wenn ausreagierte Polyisocyanat-Additionsprodukte gelöst werden sollen.

Zur Herstellung der erfindungsgemäß eingesetzten Umsetzungsprodukte können weiterhin verschiedene Hilfs- und Zusatzmittel d) Verwendung finden, z.B.

d1) Neutralisationsmittel für intermediär in die Polyurethane eingebaute Carboxylgruppen. Hierzu kommen im Prinzip beliebige anorganische oder organische Basen in Betracht. Vorzugsweise werden tert. Amine wie z.B. Trimethylamin, Triethylamin, N-Methyl morpholin, N-Methyldiethanolamin oder N,N-Dimethylethanolamin zur Neutralisation der gegebenenfalls in den Additionsprodukten intermediär vorliegenden Carboxyl- und/oder Sulfonsäuregruppen eingesetzt.

Weitere, gegebenenfalls mitzuverwendende Hilfs- und Zusatzmittel d) sind beispielsweise

d2)beliebige, aus der Polyurethanchemie an sich bekannte Beschleuniger für die Isocyanat-Polyadditionsreaktion. Im allgemeinen ist die Mitverwendung dieser Katalysatoren jedoch nicht erforderlich.

Weitere gegebenenfalls mitzuverwendende Hilfs- und Zusatzmittel d) sind beispielsweise

d3)chemisch nicht fixierte, vorzugsweise nichtionische Emulgatoren, die gegebenenfalls zusätzlich zu den chemisch eingebauten Emulgatoren mitverwendet werden können. Derartige Emulgatoren sind beispielsweise ethoxyliertes Nonylphenol, Polyoxyethylenlaurylether odr Polyoxyethylenlaurat, -oleat oder -stearat, wobei diese Zusatzmittel im allgemeinen 8 bis 50 Oxyethyleneinheiten pro Molekül aufweisen. Diese externen Emulgatoren werden nach Beendigung der Isocyanat-Additionsreaktion den erfindungsgemäßen eingesetzten Umsetzungsprodukten gegebenenfalls zugesetzt, um deren Löslichkeits- bzw. Dispergierbarkeit in Wasser zu verbessern. Die hiermit in die erfindungsgemäßen Lösungen oder Dispersionen eingeführten zusätzlichen Oxyethyleneinheiten gehen nicht in die Berechnung des Gehalts der Polyisocyanat-Additionsprodukte an Ethylenoxideinheiten ein, da sich die diesbezügichen Angaben lediglich auf den Gehalt an chemisch eingebauten Ethylenoxideinheiten beziehen.

Weitere, gegebenenfalls mitzuverwendende Hilfs- und Zusatzmittel d) sind beispielsweise Lösungsmittel mit einem über 100°C liegenden Siedepunkt, die nach der Herstellung in der wäßrigen Dispersion verbleiben und bei der Destillation der unter c) genannten Lösungsmittel nicht mit abdestilliert werden. Hierzu gehören beispielsweise

d4)keine gegenüber Isocyanatgruppen reaktionsfähigen Gruppen enthaltende Lösungsmittel wie Diisopropylketon, Xylol, Dimethylformamid, Dimethylacetamid, Dimethylsulfoxid, Methylglykolacetat, Ethylglykolacetat, Butylacetat und N-Methylpyrrolidon.

d5)zu den Lösungsmittel, die kontinuierilch zugegeben werden, gehören beispielsweise die o.g., die gegebenenfalls bis 30 % Wasser enthalten können sowie solche mit gegenüber Isocyanatgruppen schwach reaktionsfähigen Gruppen wie Glykole der unter b2) genannten Art. Selbstverständlich können die genannten Lösungsmittel auch als Mischung eingesetzt werden.

Weitere gegebenenfalls mitzuverwendende Hilfs- und Zusatzmittel d) sind die üblichen wie beispielsweise inerte Füllstoffe, Pigmente, Farbstoffe, Weichmacher oder die rheologischen Eigenschaften beeinflussende Zusätze.

Bei dem für das erfindungsgemäße Verfahren geeigneten Dispergieraggregat handelt es sich um einen Gleichstromreaktor, wie er beispielhaft in Abb. 1 dargestellt ist. Der Gleichstromreaktor besteht aus einem Mischrohr 2 vorzugsweise ohne Einbauten, in das vorzugsweise die höherviskose Komponente mit niedrigen Geschwindigkeiten eingespeist wird, und einer koaxial angebrachten Düse 1, über die vorzugsweise die niedrigviskose Komponente durch Vordrücke von etwa 20 bis etwa 500 bar auf Geschwindigkeiten von 50 bis 200 m/sec gebracht und in das Mischrohr eingedüst wird. Das Verhältnis der Durchmesser von Düse zu Mischrohr beträgt vorzugsweise 0,01 bis 0,5:1. Das Verhältnis von Durchmesser zu Länge des Mischrohres beträgt vorzugsweise 2-0,01:1, wobei die Länge des Mischrohres als Abstand zwischen dem Austritt der Düse 1 und dem Mischrohrende definiert ist.

Durch die gewählte Anordnung von Düse und Mischrohr findet ein Impuls- und Stoffaustausch statt. Es werden Leistungsdichten bis zu 500 W/cm³ erreicht. Am Ende des Mischrohres ist praktisch die gesamte kinetische Energie der eingedüsten Komponente in Reibungs- und Mischarbeit umgesetzt. Neben der intensiven Mischwirkung ist die Unempfindlichkeit gegen Anbackungen an den Wandungen ein wesentliches Merkmal des erfindungsgemäßen Gleichstromreaktors. Durch die gezielten hohen Scherkräfte wird eine Selbstreinigung des Mischrohres erreicht.

Neben dem eingentlichen Dispergieraggregat, für das erfindungsgemäß der oben beschriebene Gleichstromreaktor eingesetzt wird, kommen gegebenenfalls weitere Mischaggregate zur Anwendung.

Hierbei handelt es sich entweder um Rotor-Stator Systeme wie beispielsweise Durchflußmischer der

Firme Ekato RMT (Schopfheim; Bundesrepublik Deutschland), Lightnin (Neu-Isenburg; Bundesrepublik Deutschland) und Hennecke (Stachelrührer), sowie Kreiselhomogenisiermaschinen, z.B. Supraton®-Maschine der Firma Supraton Auer & Zucker OHG (Norf; Bundesrepublik Deutschland) oder Dispax-Reaktor® der Firma Jahnke & Kunkel KG (Staufen; Bundesrepublik Deutschland) oder Dispergiermaschinen, wie sie in DE-OS 3 319 921 beschrieben werden. Die Dispergierleistung beträgt je nach verwendetem Mischertyp und Viskosität der zu vermischenden Komponenten etwa 0,3 bis 10 kW pro Liter Mischerinhalt.

Weiterhin geeignete Mischaggregate sind statische Mischer wie beispielsweise Mischer mit einfachen Einbauten (z.B. Wendel beim Static Mixer® der Firma Kenics Corp.; USA), Mehrkanal-Mischer (z.B. AMK-Ross-ISG-Mischer der Aachener Misch- und Knetmaschinen-Fabrik, Bundesrepublik Deutschland) oder sogenannte Packungsmischer, z.B. der statische Mischer der Firma Sulzer AG (Winterthur, Schweiz) und der BKM-Mischer der Bayer AG, Bundesrepublik Deutschland).

Bei einer bevorzugten Ausführungsweise des erfindungsgemäßen Verfahrens wird im allgemeinen zunächst aus den Isocyanaten der unter a1) genannten Art, gegebenenfalls unter Mitverwendung der unter a2) und a3) genannten Isocyanate, gegebenenfalls unter Mitverwendung der weiteren genannten Isocyanate, und den unter b1) genannten höhermolekularen Polyhydroxyverbindungen, gegebenenfalls unter Mitverwendung von Kettenverlängerungsmitteln der unter b2) und b3) beispielhaft genannten Art, gegebenenfalls unter Mitverwendung von ionischen oder potentiell ionischen Aufbaukomponenten b4) und gegebenenfalls nichtionisch hyrophilen Aufbaukomponenten b5), gegebenenfalls in Gegenwart der unter c1) oder d4) genannten Lösungsmittel gegebenenfalls in Gegenwart der weiteren Hilfs- und Zusatzmittel d1) bis d3), bei Temperaturen von vorzugsweise 20-150°C, bevorzugt 20-130°C, ein NCO-endständiges Prepolymer hergestellt. Gegebenenfalls kann das erhaltene Prepolymer anschließend in einem geeigneten Lösungsmittel gelöst werden, wobei die Lösung entweder diskontinuierlich durch Zugabe der gesamten Menge des Lösungsmittels zur Gesamtmenge des Prepolymeren, dem zur Viskositätserniedrigung unter Umständen wenig Lösungsmittel zugemischt wurde, erfolgt, wobei hierbei Lösungsmittel der unter c1) und gegebenenfalls d4) beschriebenen Art eingesetzt werden, oder aber, in einer bevorzugten Verfahrensweise, die Lösung kontinuierlich erfolgt durch Mischen des Prepolymeren und des Lö sungsmittels in einem der obengenannten Mischaggregate, wobei die zu mischenden Komponenten kontinuierlich mit Hilfe von Pumpen wie beispielsweise Kolbenpumpen, Zahnradpumpen, Kreiselpumpen, Schlauchpumpen, oder durch Druck in die Mischaggregate gefördert werden, und wobei Lösungsmittel der unter c2) und gegebenenfalls d5) genannten Art eingesetzt werden. Selbstverständlich ist es im Sinne des erfindungsgemäßen Verfahrens auch möglich, das zu verwendende Lösungsmittel (-gemisch) teilweise diskontinuierlich und teilweise kontinuierlich in der oben beschriebenen Weise zuzugeben.

Wird das Prepolymer bei erhöhter Temperatur verarbeitet, kann es gegebenenfalls von Vorteil sein, Vorratsbehälter, Pumpenaggregate und Leitungen zu beheizen. Das Lösungsmittel kann gegebenenfalls auch bei erhöhten Temperaturen, gegebenenfalls auch unter Druck, mit dem Prepolymer vermischt werden. Prepolymer-(Lösung) und flüssige Phase können selbstverständlich bei unterschiedlicher Temperatur gefördert und gemischt werden.

Die Verarbeitung des Prepolymeren kann erfindungsgemäß aber auch ohne Verwendung von Lösungsmitteln erfolgen.

Das gegebenenfalls gelöste Prepolymer wird im allgemeinen anschließend einer Kettenverlängerung unterzogen. Die Kettenverlängerung kann vor, während oder nach der Dispergierung in Wasser erfolgen. Wird ein gelöstes Prepolymer eingesetzt, erfolgt die Zugabe der Kettenverlängerungsmittel vorzugsweise vor der Dispergierung in Wasser.

In einer besonders bevorzugten Ausführungsform des erfindungsgemäßen Verfahrens werden das Kettenverlängerungsmittel sowie das gelöste Prepolymer kontinuierlich durch Mischen in einem der obengenannten Mischaggregate zur Reaktion gebracht, wobei die zu vermischenden Komponenten durch Druck oder Hilfe von Pumpen der obengenannten Art in das Mischaggregat gefördert werden.

Die Zeit der Kettenverlängerung wird im wesentlichen durch die Fördermenge und den Rauminhalt des Mischaggregates bestimmt, kann aber durch nachgeschaltete Verweilzeitstrecken, wie einfache Rohrleitungen oder Zwischengefäße beliebig verändert werden.

Wird das Prepolymer ungelöst weiterverarbeitet, erfolgt die Zugabe der Kettenverlängerungsmittel im allgemeinen während oder nach der Dispergierung in Wasser.

Als Kettenverlängerungsmittel werden vorzugsweise aminische oder hydrazinische Gruppen enthaltende Verbindungen der unter b3) oder b4) genannten Art eingesetzt.

Das Verhältnis von NCO-Gruppen des Prepolymeren zu gegenüber NCO-Gruppen reaktiven Gruppen des Kettenverlängerungsmittels beträgt im allgemeinen 0,7:1 bis 1:0,2, bevorzugt 0,8:1 bis 1:0,4.

Werden zur Herstellung der Dispersionen oder Lösungen Aufbaukomponenten mit potentiell hydrophilen Gruppen eingesetzt, so kann die Überführung der potentiell hydrophilen Gruppen in hydrophile Gruppen vor oder während der Dispergierung mit Wasser erfolgen. Erfolgt die Überführung vor der Dispergierung, so wird das gegebenenfalls gelöste und gegebenenfalls verlängerte Prepolymere sowie die zur Überführung der potentiell hydrophilen Gruppe in hydrophile Gruppen geeigneten Aufbaukomponenten kontinuierlich in einem der obengenannten Mischaggregate zusammengeführt. Bei der Überführung während der Dispergierung werden die zur Überführung der potentiell hydrophilen Gruppe in hydrophile Gruppen geeigneten Aufbaukomponenten dem Dispergierwasser zugemischt.

Die zur Unterstützung der Dispergierung geeigneten chemisch nicht fixierten Emulgatoren d3) können ebenfalls vor oder während der Dispergierung dem Prepolymer zugesetzt werden. Hierbei wird nach der oben beschriebenen Verfahrensweise vorgegangen, oder aber, die externen Emulgatoren werden direkt bei der Herstellung des Prepolymeren eingesetzt.

Die Emulgatoren d3) werden vorzugsweise in Konzentrationen von 0-25 Gew.-%, bevorzugt 0-10 Gew.-% bezogen auf Feststoff, eingesetzt.

Das gegebenenfalls gelöste und gegebenenfalls kettenverlängerte Prepolymer wird anschließend kontinuierlich in dem obengenannten Gleichstromreaktor mit Wasser dem gegebenenfalls die obengenannten Kettenverlängerungsmittel zugesetzt sind, gegebenenfalls auch unter (Mit) verwendung gleicher oder anderer Latices als wäßrige Phase, vermischt, wobei die zu vermischenden Komponenten durch Druck oder mit Hilfe von Pumpen der obengenannten Art gegebenenfalls bei erhöhten Temperaturen und/oder unter Druck in das Mischaggregat gefördert werden.

Bei Verwendung von Lösungsmitteln wird das dispergierte Produkt anschließend bei Temperaturen von 20 bis 100°C, vorzugsweise bei 30 bis 90°C, bei erniedrigtem Druck vom Lösungsmittel befreit. Hierzu werden entweder die üblichen Kesselverdampfer oder aber bevorzugt Verdampferbauarten mit gefluteten Verdampferflächen wie z.B. Umlaufverdampfer mit außenliegenden Heizregister, Robert-Verdampfer, Herbert-Verdampfer, oder Langrohr-Verdampfer wie sie in Ullmanns Enzylcopädie der technischen Chemie, Band 2, Seite 653-655 beschrieben sind, eingesetzt. Zur Erreichung von niedrigen Restlösungsmittelgehalten kann es gegebenenfalls erforderlich sein, die Destillation in mehr als einer Stufe durchzuführen.

In einer besonderen Ausführungsform des erfindungsgemäßen Verfahrens wird das nach der Destillation erhaltene Lösungsmittel, das bis zu 50 Gew.-% bevorzugt 0 bis 30 Gew.-%, besonders bevorzugt 0 bis 20 Gew.-% Wasser enthalten kann, als Lösungsmittel des Prepolymeren mit Hilfe von Pumpen oder durch Druck unmittelbar in den Herstellungsprozeß zurückgeführt. Wird die Destillation des Lösungsmittels aus der wäßrigen Dispersion in mehr als einer Stufe durchgeführt, werden vorzugsweise nur die Destillate unmittelbar wiederverwendet, die einen Gehalt an Wasser bis zu 50 Gew.-%, bevorzugt 0 bis 30 Gew.-%, besonders bevorzugt 0 bsi 20 Gew.-% Wasser enthalten. Gegebenenfalls kann es zur Erreichung des genannten Gehalts des Lösungsmittels an Wasser erforderlich sein, die Destillation unter Verwendung einer Destillationskolonne durchzuführen.

Selbstverständlich ist es im Sinne der Erfindung auch möglich, die Lösungsmitteldestillate in einem gesonderten Arbeitsschritt von Wasser zu befreien, so daß der Gehalt an Wasser bis zu 50 Gew.-%, bevorzugt 0 bis 30 Gew.-%, besonders bevorzugt 0 bis 20 Gew.-% Wasser beträgt, um die gereinigten Destillate als Lösungsmittel erneut einzusetzen.

Das letztlich erhaltene Produkt ist eine stabile wäßrige Polyurethan(harnstoff)-Dispersion oder Lösung mit einem Feststoffgehalt bis 60 Gew.-%, bevorzugt 15 bis 60 Gew.-% und besonders bevorzugt 25 bis 50 Gew.-%. Die Dispersionen oder Lösungen können in einem beliebigen Verhältnis weiter verdünnt werden. Die nach dem beschriebenen Verfahren hergestellten Polyurethandispersionen können auch im Anschluß an die Dispergierung oder Destillation mit Isocyanaten modifiziert werden, wie es in DE-OS 2 708 442 beschrieben wird.

Die Dispersionen können mit anderen Dispersionen verschnitten werden, wie sie z.B. mit Polyvinylacetat-, Polyethylen-, Polystyrol-, Polybutandien-, Polyvinylchlorid-, Polyacrylat- und -copolymerisat-Kunststoff dispersionen. Auch der Zusatz von an sich bekannten chemisch nicht fixierten vorzugsweise ionischen, Emulgatoren, ist möglich.

Schließlich können auch Füllstoffe, Weichmacher, Pigmente, Ruß- und Kieselsäuresole, Aluminium-, Ton-, Asbest-Dispersionen in die Dispersionen eingearbeitet werden.

Die Dispersionen der Polyurethanmassen in Wasser sind meist stabil, lager- und versandfähig und können zu beliebig späteren Zeitpunkt, z.B. formgebend, verarbeitet werden. Sie trocknen im allgemeinen unmittelbar zu formstabilen Kunststoffüberzügen auf, jedoch kann die Formgebung der Verfahrensprodukte auch in Gegenwart von an sich bekannten Vernetzungsmitteln erfolgen. Je nach der gewählten chemischen Zusammensetzung und dem Gehalt an Urethangruppen erhält man Polyurethane mit unterschiedlichen Eigenschaften. So können weiche klebrige Massen, thermoplastische und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100-180°C, thermoplastisch verarbeiten, sofern sie nicht chemich vernetzt sind.

Die Verfahrensprodukte sind zur Beschichtung bzw. zum Überziehen und zum Imprägnieren von gewebten und nicht gewebten Textilien, Leder, Papier, Holz, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Kork- oder Holzmehl, Glasfaser, Asbest, papierartige Materialien, Plastik- oder Gummiabfälle, keramische Materialien, als Hilfsmittel im Zeugdruck und in der Papierindustrie, als Zusatz zu Polymerisaten, als Schlichtemittel, beispielsweise für Glasfasern, und zur Lederausrüstung geeignet.

Vorzugsweise werden die Dispersionen bzw. Pasten dabei auf eine poröse Unterlage appliziert, die anschließend mit dem Fertigprodukt verbunden bleibt, wie z.B. gewebte oder nicht gewebte textile Gebilde oder Fasermatten, Filze oder Vliese, auch Papiervliese, Schaumstoff-Folien oder Spaltleder, die vermöge ihrer Saugwirkung eine sofortige Verfestigung des Überzuges bewirken. Anschließend wird bei erhöhter Temperatur getrocknet und gegebenenfalls verpreßt. Die Trocknung kann aber auch auf glatten porösen oder nichtporösen Materialien, z.B. Metall, Glas, Papier, Karton, keramischen Materialien, Stahlblech, Silikon-Kautschuk, Aluminiumfolie, erfolgen, wobei das fertige Flächengebilde anschließend abgehoben und als solches verwendet bzw. nach dem Umkehrverfahren durch Kleben, Flammkaschieren, Kalandern auf ein Substrat aufgebracht wird. Die Applikation nach dem Umkehrverfahren kann dabei zu einem beliebigen Zeitpunkt vorgenommen werden.

Durch Mitverwendung von Vinylpolymerisaten oder aktiven bzw. inaktiven Füllstoffen kann man die Eigenschaften der Verfahrensprodukte abwandeln. Verwendbar sind beispielsweise Polyethylen, Polypropylen, Polyvinylacetat, Ethylen-Vinylacetat-Copolymerisate, die gegebenenfalls (teilweise) verseift und/oder mit Vinylchlorid gepfropft sein können, Styrol-Butadien-Copolymerisate, Ethylen-(Pfropf)-Copolymerisate, Polyacrylate, Ruß, Kieselsäure, Asbest, Talkum, Kaolin, Cellulose, Titandioxid, das als Pulver oder in Form von Fasern eingesetzt werden kann. Je nach gewünschtem Eigenschaftsbild und Verwendungszweck der Endprodukte können bis zu 70 %, bezogen auf Gesamttrockensubstanz, solcher Füllstoffe im Endprodukt enthalten sein.

Selbstverständlich können auch Farbstoffe, Pigmente, Weichmacher oder die rheologischen Eigenschaften beeinflussende Zusätze beigefügt werden.

Die Trocknung der nach verschiedenen Applikationstechniken erhaltenen Produkte kann bei Raumtemperatur oder bei erhöhter Temperatur erfolgen. Die im Einzelfall zu wählende Trocknungstemperatur, die außer von der chemischen Zusammensetzung des Materials vor allem vom Feuchtigkeitsgehalt, der Trockenzeit und der Schichtdicke abhängt, wird leicht durch einen Vortest ermittelt. Bei gegebener Erhitzungszeit muß die Trockentemperatur in jedem Fall unter der Verfestigungstemperatur liegen.

Anschileßend können die Flächengebilde zur Erhöhung der Widerstandsfestigkeit ihrer Oberfläche mit einer Appretur (Finish) überzogen werden. Bevorzugt werden hierfür wiederum wäßrige Dispersionen oder Lösungen verwendet.

Aus einteiligen Dispersionen und Solen enthaltene sehr harte Polyurethane sind als Einbrennlacke und teilweise sogar als lufttrocknende Lacke geeignet. Sie verbinden hohe Härte und Elastizität mit gutem Hochglanz und - bei Verwendung mit aliphatischen Diisocyanaten - mit guter Licht- und Wetterechtheit.

Beispiel 1

In einem Kurzzeitmischrohr entsprechend Fig. 1 mit einem Düseninnendurchmesser von 0,8 mm, einem Mischrohrdurchmesser von 1,0 cm und einer Mischrohrlänge von 1,0 cm wird ein Prepolymer mit einem NCO-Gehalt von 5,05 Gew.-% hergestellt aus Hexamethylendiisocyanat, einem Mischpolyester aus Adipinsäure, Hexandiol sowie Neopentylglykol (Gewichtsverhältnis der Diole = 11:6) mit einem mittleren Molekulargewicht von 1700, einem propoxylierten Addukt aus 2-Butendiol-1,4 und $NaHSO_3$ (Mg: 430; 70 %ig in Toluol) und einem auf Butanol gestarteten Polyethylenoxid-Polypropylenoxid-Polyether (OH-Zahl: 26; 78,3 Gew.-% Ethylenoxid), wobei der Gehalt an $SO_3$-Gruppen 1,5 Gew.-% und der Gehalt an innerhalb einer Polyetherkette eingebauten Ethylenoxideinheiten 1,81 Gew.-% beträgt, mit einer 5,0 %igen wäßrigen Kettenverlängererlösung von Isophorondiamin vermischt. Das Verhältnis von Prepolymer zu Kettenverlängererlösung beträgt 1:1,62. Die wäßrige Kettenverlängererlösung wird mit einem Vordruck von 100 bar in die Düse eingebracht. Das ausgetragene Produkt wird mit 3,3 kg/min in ein Vorratsgefäß abgeführt und bei 50°C gerührt, bis kein NCO-Gehalt mehr nachweisbar ist.

Man erhält eine feinteilige Dispersion mit einem Feststoffgehalt von 40 Gew.-%. Die Dispersion ist während 15 min zentrifugenstabil.

Beispiel 2

In einem Kurzzeitmischrohr entsprechend Fig. 1 mit einem Düseninnendurchmesser von 0,8 mm, einem Mischrohrdurchmesser von 0,4 cm und einer Mischrohrlänge von 15,0 cm wird ein Prepolymer mit einem NCO-Gehalt von 4,11 Gew.-%, hergestellt aus Hexamethylendiisocyanat, einem Polyester aus Adipinsäure und Butandiol mit einem mittleren Molekulargewicht von 2250, einem propoxylierten Addukt aus 2-Butendiol-1,4 und $NaHSO_3$ (Mg: 430; 70 %ig in Toluol) und einem auf Butanol gestarteten Polyethylenoxid-Polypropylenoxid-Polyether (OH-Zahl : 26; 78,3 Gew.-% Ethylenoxid), wobei der Gehalt an $SO_3$-Gruppen 0,63 Gew.-% und der Gehalt an innerhalb einer Polyetherkette eingebauten Ethylenoxideinheiten 6,74 Gew.-% beträgt, mit Wasser vermischt, welches 150 ppm Permethyldiethylentriamin enthält. Das Verhältnis von Prepolymer zu Wasser beträgt 1:1,5. Das Wasser wird mit einem Vordruck von 250 bar in die Düse eingebracht. Das ausgetragene Produkt wird mit 3,2 kg/min in ein Vorratsgefäß abgeführt und bei 50°C gerührt, bis kein NCO-Gehalt nachweisbar ist.

Man erhält eine feinteilige Dispersion mit einem Feststoffgehalt von 40 Gew.-%. Die Dispersion ist während 15 min zentrifugenstabil.

Beispiel 3

In einem Kurzzeitmischrohr entsprechend Fig. 1 mit einem Düseninnendurchmesser von 0,7 mm, einem Mischrohrdurchmesser von 0,4 cm und einer Mischrohrlänge von 15,0 cm wird ein Prepolymer mit einem NCO-Gehalt von 4,58 Gew.-% hergestellt aus Hexamethylendiisocyanat, einem Mischpolyester aus Adipinsäure, Hexandiol sowie Neopentylglykol (Gewichtsverhältnis der Diole = 11:6) mit einem mittleren Molekulargewicht von 1700, einem propoxylierten Addukt aus 2-Butendiol-1,4 und $NaHSO_3$ (Mg: 430; 70 %ig in Toluol) und einem auf Butanol gestarteten Polyethylenoxid-Polypropylenoxid-Polyether (OH-Zahl: 26; 78,3 Gew.-% Ethylenoxid), wobei der Gehalt an $SO_3$-Gruppen 1,5 Gew.-% und der Gehalt an innerhalb einer Polyetherkette eingebauten Ethylenoxideinheiten 1,1 Gew.-% beträgt, mit Wasser von 85°C vermischt, welches 100 ppm Permethyldiethylentriamin enthält. Das Verhältnis von Prepolymer zu Wasser beträgt 1:1,5. Das Wasser wird mit einem Vordruck von 250 bar in die Düse eingebracht. Das ausgetragene Produkt wird mit 3,2 kg/min in ein Vorratsgefäß abgeführt und bei 50°C gerührt, bis kein NCO-Gehalt mehr nachweisbar ist.

Man erhält eine feinteilige Dispersion mit einem Feststoffgehalt von 40 Gew.-%. Die Dispersion ist während 15 min zentrifugenstabil.

**Patentansprüche**

1. Verfahren zur kontinuierlichen Herstellung von wäßrigen Polyurethandispersionen durch Vermischen eines Produktes, das durch Umsetzung von Polyisocyanaten mit Verbindungen vom Molekulargewicht von 400 bis 10 000, die mindestens zwei gegenüber Isoyanaten reaktionsfähige Gruppen enthalten, gegebenenfalls unter Mitverwendung weiterer Ausgangsprodukte und/oder Zusatzstoffe erhalten worden ist, mit Wasser, das Zusatzstoffe enthalten kann, dadurch gekennzeichnet, daß die Vermischung des Polyisocyanatumsetzungsproduktes mit Wasser in einem Gleichstromreaktor erfolgt, wobei eine der zu vermischenden Komponenten oder ein eine der beiden zu vermischenden Komponenten enthaltendes Gemisch auf einen Vordruck von 20 bis 500 bar komprimiert wird und durch eine koaxial angebrachte Düse 1 in das Kurzzeitmischrohr 2 entspannt und mit der anderen Komponente oder einem die andere Komponente enthaltenden Gemisch vermischt wird.

2. Verfahren zur kontinuierlichen Herstellung von wäßrigen Polyurethandispersionen nach Anspruch 1 dadurch gekennzeichnet, daß das Verhältnis von Düseninnendurchmesser der Düse 1 zum Innendurchmesser des Kurzzeitmischrohrs 2 0,01-0,5:1 beträgt und das Verhältnis des Innendurchmessers des Kurzzeitmischrohres 1 zur Länge des Kurzzeitmischrohres 2 2-0,01:1 beträgt, wobei die Länge des Kurzzeitmischrohres als Abstand zwischen dem Austritt der Düse 1 und dem Mischrohrende definiert ist.

3. Verfahren gemäß den Ansprüchen 1 und 2, dadurch gekennzeichnet, daß ein hydrophiles Umsetzungsprodukt eingesetzt wird.

4. Verfahren gemäß den Ansprüchen 1-3, dadurch gekennzeichnet, daß das eingesetzte Umsetzungsprodukt einen Anteil an freien Isocyanatgruppen enthält.

5. Verfahren gemäß Ansprüchen 1-4, dadurch gekennzeichnet, daß bei der Herstellung des eingesetzten Umsetzungsprodukts Ausgangsprodukte oder Zusatzstoffe mit ionischen, vorzugsweise

$=\overset{+}{N}=$-, $-COO^-$- oder $-SO_3^-$-Gruppe

oder potentiell ionischen Gruppen, wobei die potentiell ionischen Gruppen vor der Vermischung mit Wasser ganz oder teilweise in ionische Gruppen überführt werden und der Gehalt an (potentiell) ionischen Gruppen 1-200 Milliäquivalent pro 100 g Feststoff beträgt, verwendet werden.

6. Verfahren gemäß den Ansprüchen 1-5, dadurch gekennzeichnet, daß bei der Herstellung des eingesetzten Umsetzungsprodukts Ausgangsprodukte oder Zusatzstoffe, die Ethylenoxideinheiten enthalten, wobei der Gehalt an diese Einheiten vorzugsweise $\leq$ 25 Gew.-%, bezogen auf Feststoff ist, verwendet werden.

7. Verfahren gemäß den Ansprüchen 1-6, dadurch gekennzeichnet, daß bei der Herstellung des eingesetzten Umsetzungsprodukts Kettenverlängerungsmittel, die vorzugsweise ein MG' von 18-400 haben, und zwei gegenüber Isocyanatgruppen reaktionsfähige Gruppen besitzen, mitverwendet werden.

8. Verfahren gemäß den Ansprüchen 1-7, dadurch gekennzeichnet, daß bei der Herstellung des eingesetzten Umsetzungsprodukts organische Lösungsmittel verwendet werden.

9. Verfahren gemäß den Ansprüchen 1-8, dadurch gekennzeichnet, daß das eingesetzte Wasser ein Neutralisationsmittel für potentiell ionische Gruppen enthält.

10. Verfahren gemäß den Ansprüchen 1-9, dadurch gekennzeichnet, daß das eingesetzte Wasser ein mit Isocyanatgruppen schneller als Wasser reagierendes Kettenverlängerungsmittel enthält.

**Claims**

1. A process for the continuous production of aqueous polyurethane dispersions by mixing of a product, which has been obtained by reaction of polyisocyanates with compounds having a molecular weight

in the range from 400 to 10,000 and containing at least two isocyanate-reactive groups, optionally using other starting products and/or additives, with water which may contain additives, characterized in that the mixing of the polyisocyanate reaction product with water takes place in a co-current reactor, one of the components to be mixed or a mixture containing one of the two components to be mixed being compressed to a system pressure in the range from 20 to 500 bar and expanded through a coaxially arranged nozzle 1 into the short-time mixing tube 2 and being mixed with the other component or with a mixture containing the other component.

2. A process for the continuous production of aqueous polyurethane dispersions as claimed in Claim 1, characterized in that the ratio of the internal nozzle diameter of the nozzle 1 to the internal diameter of the short-time mixing tube 2 is 0.01–0.5:1 and the ratio of internal diameter to length of the short-time mixing tube 2 is 2–0.01:1, the length of the short-time mixing tube being defined as the distance between the exit of the nozzle 1 and the end of the mixing tube.

3. A process as claimed in Claims 1 and 2, characterized in that a hydrophilic reaction product is used.

4. A process as claimed in Claims 1 to 3, characterized in that the reaction product used contains a proportion of free isocyanate groups.

5. A process as claimed in Claims 1 to 4, characterized in that starting products or additives containing ionic groups, preferably

$=\overset{+}{N}=$-, $-COO^-$- oder $-SO_3^-$-groups,

or potentially ionic groups, the potentially ionic groups being completely or partly converted into ionic groups before the mixing with water and the content of (potentially) ionic groups being from 1 to 200 milliequivalents per 100 g solids, are used in the production of the reaction product used.

6. A process as claimed in Claims 1 to 5, characterized in that starting products or additives containing ethylene oxide units, the content of these units preferably being ≤25% by weight, based on solids, are used in the production of the reaction product used.

7. A process as claimed in Claims 1 to 6, characterized in that chain-extending agents preferably having a molecular weight of 18 to 400 and containing two isocyanate-reactive groups are used in the production of the reaction product used.

8. A process as claimed in Claims 1 to 7, characterized in that organic solvents are used in the production of the reaction product used.

9. A process as claimed in Claims 1 to 8, characterized in that the water used contains a neutralizing agent for potentially ionic groups.

10. A process as claimed in Claims 1 to 9, characterized in that the water used contains a chain-extending agent which reacts with isocyanate group more quickly than water.

## Revendications

1. Procédé de production continue de dispersions aqueuses de polyuréthanne par mélange d'un produit qui a été obtenu par réaction de polyisocyanates avec des composés de poids moléculaire allant de 400 à 10 000, qui contiennent au moins deux groupes aptes à réagir vis-à-vis d'isocyanates, le cas échéant avec utilisation conjointe d'autres matières de départ et/ou d'autres additifs, avec de l'eau qui peut contenir des additifs, caractérisé en ce que le mélange du produit de réaction du polyisocyanate avec l'eau est effectué dans un réacteur à écoulement continu, l'un des composants à mélanger ou un mélange contenant l'un des deux composants à mélanger étant comprimé à une pression d'alimentation de 20 à 500 bars et étant détendu par une buse (1) à disposition coaxiale dans le tube mélangeur (2) à action instantanée et étant mélangé avec l'autre composant ou avec un mélange contenant l'autre composant.

2. Procédé de production continue de dispersions aqueuses de polyuréthanne suivant la revendication 1, caractérisé en ce que le rapport du diamètre intérieur de la buse (1) au diamètre intérieur du tube mélangeur (2) à action instantanée a une valeur de 0,01 à 0,5:1 et le rapport du diamètre intérieur du tube mélangeur (2) à action instantanée à la longueur de ce même tube a une valeur de 2 à 0,01:1, la longueur du tube mélangeur à action instantanée étant définie comme distance entre la sortie de la buse (1) et l'extrémité du tube mélangeur.

3. Procédé suivant les revendications 1 et 2, caractérisé en ce qu'on utilise un produit de réaction hydrophile.

4. Procédé suivant les revendications 1 à 3, caractérisé en ce que le produit de réaction utilisé contient une proportion de groupes isocyanato libres.

5. Procédé suivant les revendications 1 à 4, caractérisé en ce qu'on utilise dans la préparation du produit réactionnel mis en œuvre, des composés de départ ou des additifs portant des groupes ioniques, de préférence

$=\overset{+}{N}=$-, $-COO^-$- oder $-SO_3^-$

ou des groupes potentiellement ioniques, les groupes potentiellement ioniques étant transformés en totalité ou en partie en groupes ioniques avant le mélange avec l'eau et la teneur en groupes (potentiellement) ioniques étant de 1 à 200 milliéquivalents par 100 g de matière solide.

6. Procédé suivant les revendications 1 à 5, caractérisé en ce qu'on utilise dans la préparation du produit réactionnel mis en œuvre des composés de départ ou des additifs qui contiennent des motifs éthylène-oxyde, la teneur en ces motifs étant de préférence égale ou inférieure à 25% en poids, par rapport à la matière solide.

7. Procédé suivant les revendications 1 à 6, caractérisé en ce qu'on utilise simultanément dans la préparation du produit réactionnel mis en œuvre, des agents d'allongement de chaîne qui ont de préférence un poids moléculaire de 18 à 400 et qui portent deux groupes aptes à réagir vis-à-vis de groupes isocyanato.

8. Procédé suivant les revendications 1 à 7, caractérisé en ce qu'on utilise des solvants organiques dans la préparation du produit réactionnel mis en œuvre.

9. Procédé suivant les revendications 1 à 8, caractérisé en ce que l'eau utilisée contient un agent de neutralisation des groupes potentiellement ioniques.

10. Procédé suivant les revendications 1 à 9, caractérisé en ce que l'eau utilisée contient un agent d'allongement de chaîne réagissant plus rapidement que l'eau avec les groupes isocyanato.

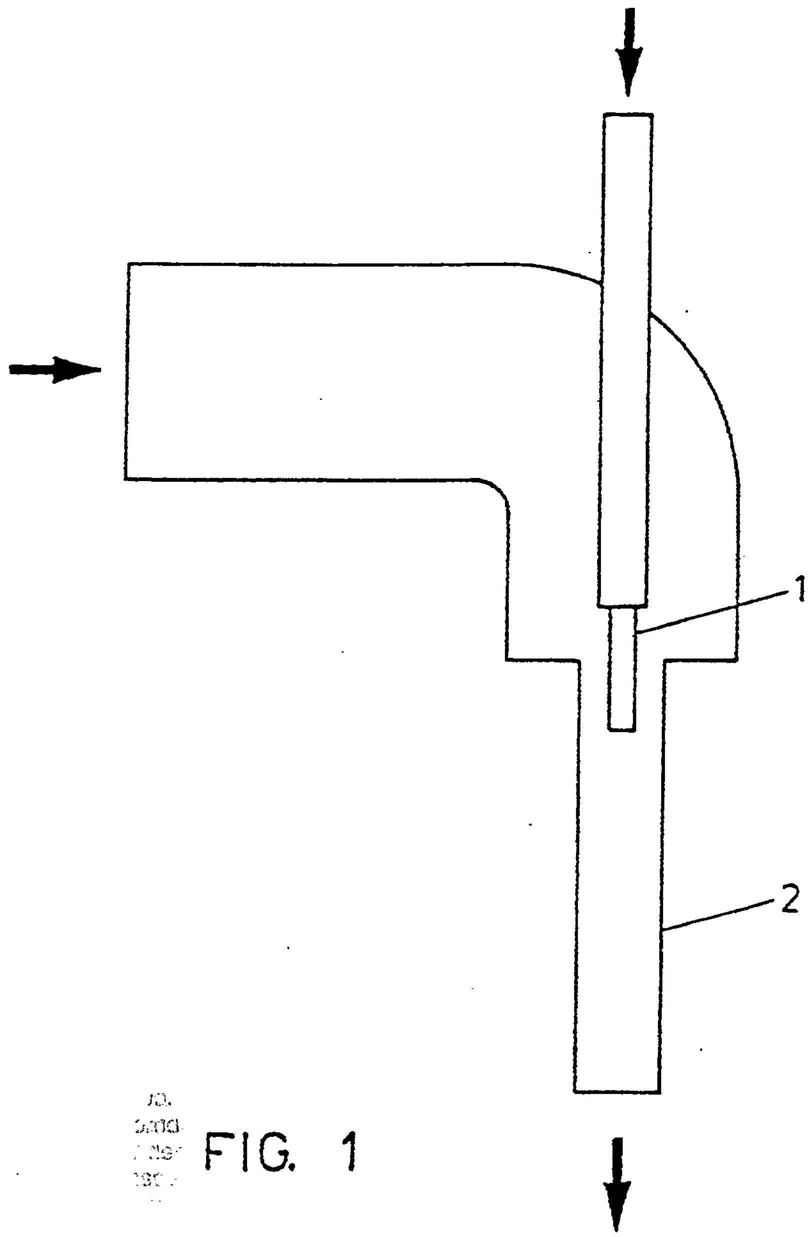


FIG. 1